# EUROPÄISCHE PATENTANMELDUNG

(11) **EP 4 293 737 A1**
(43) Veröffentlichungstag der Anmeldung: **20.12.2023**
(21) Anmeldenummer: 22179325.0
(22) Anmeldetag: 15.06.2022
(51) Int. Cl.: H01M 4/04, H01M 4/505, H01M 4/525, H01M 4/583, H01M 4/62, H01M 10/052, H01M 50/417, H01M 4/02

(54) **VERFAHREN ZUR HERSTELLUNG EINER ELEKTRODE FÜR EINEN ENERGIESPEICHER**

(71) Anmelder: Blackstone Technology Holding AG, 6340 Baar (CH)
(72) Erfinder: Gritzka, Holger, 01900 Grossröhrsdorf (DE); Fiedler, Andy, 01169 Dresden (DE); Flaschenträger, David, 6006 Luzern (CH)
(74) Vertreter: Herrmann, Johanna

(57) **Zusammenfassung**

Gemäß eines Verfahrens zur Herstellung einer Elektrode (50) für einen Energiespeicher mittels einer Siebdruckvorrichtung (2) wird mittels der Siebdruckvorrichtung (2) eine Elektrodenpaste (1) auf ein Substrat (3) aufgetragen. Die Siebdruckvorrichtung (2) enthält ein Sieb (4) zur Aufnahme der Elektrodenpaste (1), wobei die Elektrodenpaste (1) mittels eines Presselements (5) durch das Sieb (4) auf das Substrat (3) aufgetragen wird. Das Sieb (4) enthält Sieböffnungen (6), wobei zumindest eine der Sieböffnungen (6) als geschlossene Sieböffnung (7) ausgebildet ist, sodass die Elektrodenpaste (1) eine Strukturierung (8) erhält, wenn sie durch das Sieb (4) auf das Substrat (3) gedruckt wird, wobei eine gedruckte Elektrodenpaste (10) erhalten wird. Die geschlossene Sieböffnung (7) verhindert den Durchfluss der Elektrodenpaste (1) durch das Sieb (4) an der Stelle, welche die geschlossene Sieböffnung (7) enthält, sodass in der gedruckten Elektrodenpaste (10) ein Hohlraum (9) in einem Bereich der gedruckten Elektrodenpaste (10) entsteht.

## Beschreibung

### Hintergrund

Die vorliegende Erfindung betrifft ein Verfahren zur Herstellung einer Elektrode enthaltend eine Strukturierung mittels eines Siebdruckverfahrens sowie eine zugehörige Elektrode für einen Energiespeicher. Insbesondere betrifft die Erfindung ein Verfahren zur Herstellung einer Elektrode sowie eine zugehörige Elektrode, welche mittels eines dreidimensionalen Siebdruckverfahrens hergestellt ist. Der Energiespeicher ist insbesondere als Li-Ionen Energiespeicher ausgebildet.

### Stand der Technik

Eine elektrochemische Zelle kann für eine Primärbatterie oder eine Sekundärbatterie zum Einsatz kommen. Als Primärbatterie wird in der Folge eine Batterie bezeichnet, die nicht wiederaufladbar ist, das heisst, für den einmaligen Gebrauch bestimmt ist. Als Sekundärbatterie wird in der Folge eine Batterie bezeichnet, die wiederaufladbar ist: Oftmals wird für diesen Typ Energiespeicher auch der Begriff Akkumulator verwendet.

Sekundärbatterien sind bereits seit Jahrzehnten in verschiedensten Anwendungen im Einsatz, für deren elektrochemische Zellen können unterschiedlichste Materialien zum Einsatz kommen. Die Verwendungen für Sekundärbatterien nehmen zu, sie kommen beispielsweise in tragbaren elektronischen Geräten, in medizintechnischen Geräten, im Transportwesen, als Notstromaggregat, als Speicher zum Ausgleich von Schwankungen in der Stromversorgung, als Speichersystem für erneuerbare Energien.

Eine elektrochemische Zelle umfasst eine Kathode, also eine positive Elektrode, eine Anode, also eine negative Elektrode, einen Separator, der die positive Elektrode von der negativen Elektrode trennt, sowie ein Gehäuse, welches die positive Elektrode, die negative Elektrode, den Separator und einen Elektrolyten aufnimmt, in welchem die vorgenannte positive Elektrode, die negative Elektrode und der Separator zumindest teilweise aufgenommen sind. Die Anode und Kathode können über Kontakte einen Stromkreis mit einem Verbraucher ausbilden.

Damit Kathode und Anode nicht direkt miteinander in elektrischen Kontakt kommen, wird ein Separator zwischen jeder Kathode und Anode vorgesehen. Gemäß einer Verfahrensvariante kann eine der Elektroden in eine Separatortasche gesteckt werden. Der Separator kann als ein blattförmiges, mikroporöses Trennelement ausgebildet sein, welches für den Elektrolyten, Elektronen oder Ionen durchlässig ist, aber nicht für die Partikel der entsprechenden positiven oder negativen pastenförmigen aktiven Masse.

Kathoden, Separatoren und Anoden werden zu einem Zellstapel gebündelt, welcher die Primärzelle bildet. Der Zellstapel enthält üblicherweise 6 Kathoden, 6 Anoden die abwechselnd zueinander angeordnet sind, sowie die entsprechende Anzahl Separatoren, die sich zwischen je zwei benachbarten Kathoden und Anoden befinden. In einem nachfolgenden Verfahrensschritt werden die Kathoden elektrisch leitend miteinander verbunden, sodass bei Anlegen einer elektrischen Spannung ein Strom zu den Kathoden fliessen kann oder von den Kathoden abfliessen kann. In gleicher Weise werden die Anoden elektrisch leitend miteinander verbunden, sodass bei Anlegen einer elektrischen Spannung ein Strom zu den Anoden fliessen kann oder von den Anoden abfliessen kann.

Ein Akkumulator enthält eine Mehrzahl von Zellstapeln. Die Zellstapel werden in ein Kunststoffgehäuse gestellt, welches zur Aufnahme des Elektrolyten bestimmt ist. Benachbarte Zellstapel sind durch Gehäusezwischenwände voneinander getrennt. Die Kontakte der Kathoden und Anoden jeweils benachbarter Zellstapel werden miteinander üblicherweise mittels eines Schweissverfahrens verbunden. Das Gehäuse wird danach mittels eines Deckels verschlossen. Der Deckel kann Öffnungen für die positiven und negativen Kontaktpole sowie Öffnungen zur Zufuhr eines flüssigen Elektrolyten enthalten, so ein derartiger flüssiger Elektrolyt zum Einsatz kommt. Die Kontaktpole werden nach der Montage des Deckels angegossen. Der Deckel ist üblicherweise nicht abnehmbar, daher wird jedem Zellstapel der Elektrolyt durch die hierfür vorgesehenen Öffnungen zugeführt, die nach Abschluss der Befüllung ebenfalls verschlossen werden. Erst in diesem Zustand kann ein initialer Ladezyklus (Formation) durchgeführt werden. Nach Abschluss des Ladezyklus ist der Akkumulator bereit für den Einsatz. Alternativ befinden sich die Elektroden und der Elektrolyt in einer sogenannten Pouchzelle. Pouchzellen können zu Zellstapeln gebündelt werden und in einem Gehäuse aufgenommen sein. Die Kontakte der Pouchzellen werden je nach Bedarf in einer Parallelschaltung oder Serienschaltung zusammengefasst.

Für jede der Varianten können hochkapazitive Elektroden zum Einsatz kommen, mittels welchen die Elektrodeneigenschaften verbessert werden können, insbesondere die Energiedichte erhöht werden kann.

Die Verbesserung der Elektrodeneigenschaften kann vorteilhafterweise in der Elektromobilität eine Verringerung der Ladedauer zur Folge haben. Aber auch stationäre Energiespeicher und elektronische Konsumprodukte würden von der Verbesserung der Schellladefähigkeit der Energiespeicher profitieren. Die Beschaffenheit der Elektroden definiert zahlreiche Eigenschaften der Energiespeicher, wie beispielsweise die verfügbare Kapazität, Schnellladefähigkeit und Leistungsbereitstellung.

Bei einem lithiumbasierten Energiespeicher wird beim Laden und Entladen des Energiespeichers Lithium in die Aktivmaterialien ein- bzw. ausgelagert. Durch die poröse Struktur der Elektrode ergeben sich jedoch lange und komplexe Lithium-Ionen-Transportwege in der Elektrolytflüssigkeit. Diese haben teilweise starke Lithium-Konzentrationsgradienten in den Elektroden zur Folge, welche einen Abfall der verfügbaren Kapazität aufgrund von Lithiumverarmung an den Aktivmaterialoberflächen verursachen. Zur Erhöhung der Speicherkapazität werden Elektroden vorgeschlagen, die Schichtdicken von bis zu 300 µm aufweisen. Zur Steigerung der Energiedichte werden somit hochkapazitive Elektroden eingesetzt. Es hat sich aber gezeigt, dass bei Zunahme der Schichtdicke die Geschwindigkeit des Ladevorgangs der Zelle reduziert wird, welche durch die vorgenannten Effekte bedingt ist. Mit anderen Worten wird die Schnellladefähigkeit der Zelle durch die hohe resultierende Schichtdicke eingeschränkt. Die Einbringung von Strukturierungen in die Elektroden stellt einen bewährten Ansatz zur Verringerung der erwähnten Lithium-Konzentrationsgradienten dar.

Beispielsweise ist es bekannt, mittels Laserstrukturierung eine Strukturierung in die Elektroden einzubringen. Als ein wesentlicher Vorteil der laserbasierten Strukturierung wird die Möglichkeit der Einstellung der Strukturtiefe in der Elektrode mittels der Auswahl geeigneter Laserparameter angesehen. Bei der Laserstrukturierung wird mittels einer Laservorrichtung eine Mehrzahl von Laserpunkten in die Aktivmaterialschicht der Elektrode eingebracht. Eine derartige Laservorrichtung kann beispielsweise einen 2-Achs-Galvanoscanner oder einen Polygonscanner umfassen. Mittels der Laservorrichtung wird ein Laserstrahl erzeugt, der einen Laserpunkt an der gewünschten Position in der Aktivmaterialschicht erstellt. Mittels eines 2-Achs-Galvanoscanners können die Laserpunkte einzeln nacheinander an einer beliebigen Position der Aktivmaterialschicht erstellt werden. Mittels eines Polygonscanners können mehrere Laserpunkte parallel zueinander in einer Reihe erstellt werden. Ein Einsatz dieses Verfahrens in einer industriellen Elektroden-/Zellproduktion ist grundsätzlich möglich, allerdings erfordert der Einsatz einer Laservorrichtung einen zusätzlichen Arbeitsschritt.

Alternativ ist es bekannt, eine Strukturierung mittels einer Walzvorrichtung in eine Elektrodenbahn einzubringen. In einem Walzprozess wird die Elektrodenbahn zwischen zwei Walzen durchgeführt, die oberhalb und unterhalb der Elektrodenbahn angeordnet sind. Die obere Walze ist mit einer Negativstruktur versehen, welche beim Walzprozess auf die Elektroden abgebildet werden kann. Auch die Walzvorrichtung erfordert einen zusätzlichen Arbeitsschritt.

Es ist auch bekannt, eine Strukturierung mittels Gasperforation anzubringen, wobei die Strukturierung mittels gezielten Druckstößen in die Elektrode ohne Materialverlust eingebracht werden kann und das Kathodenmaterial abgesehen von einer örtlichen Verdichtung ohne theoretischen Kapazitätsverlust verwendet werden kann, wenn eine Verdrängung des Aktivmaterials durch die Druckstöße direkt nach der Beschichtungsphase erfolgt. Auch die Gasperforation erfordert eine zusätzliche Vorrichtung zur Bereitstellung des Druckgases und zur Einbringung der Druckstöße in die Kathodenpaste.

Gemäß einer weiteren Variante kann ein flüssiger Hilfsstoff an definierten Punkten der Elektrode durch Injektion des flüssigen Hilfsstoffes in die Kathodenpaste eingebracht werden. Die flüssigen Hilfsstoffe vermischen sich nicht mit der Kathodenpaste und verdampfen während des Trocknungsprozesses. Im Idealfall verhält sich der flüssige Hilfsstoff passiv und hat daher keinen Einfluss auf das Aktivmaterial. Auch für die Einbringung des flüssigen Hilfsstoffs ist eine Verteilungsvorrichtung vorzusehen, welche sicherstellt, dass der flüssige Hilfsstoff nur an definierten Stellen im Aktivmaterial eingebracht wird. Zudem sollte beim Trocknungsprozess sichergestellt werden, dass der flüssige Hilfsstoff rezykliert werden kann, also während des Trocknungsprozesses abgesaugt wird, von anderen Gasen getrennt wird und wieder verwendet werden kann.

Daher haben die genannten Verfahren zumindest einige der nachfolgend angeführten Nachteile: Aktivmaterialverlust, sie erfordern einen zusätzlichen Arbeitsschritt und/oder zusätzliche Anlagen und/oder zusätzlichen Energieaufwand.

### Aufgabe der Erfindung

Es ist Aufgabe der Erfindung, eine verbesserte Elektrode für einen Energiespeicher bereitzustellen, welche eine verkürzte Ladungsdauer für bei Verwendung dicker Schichten durch eine Strukturierung ermöglicht, wobei die Strukturierung ohne zusätzlichen Arbeitsschritt während der Herstellung der Elektrode in die Elektrode eingebracht werden soll.

### Beschreibung der Erfindung

Die Lösung der Aufgabe der Erfindung erfolgt durch ein Verfahren zur Herstellung einer Elektrode gemäß Anspruch 1. Vorteilhafte Ausführungsbeispiele des Verfahrens sind Gegenstand der Ansprüche 2 bis 5. Vorteilhafte Varianten des Siebs sind Gegenstand der Ansprüche 7 bis 10.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für das erfindungsgemäße Verfahren sowie die erfindungsgemäße Elektrode. Die Beschreibung einer bestimmten Elektrode ist nur als beispielhaft anzusehen. In der Beschreibung und den Ansprüchen werden die Begriffe "enthalten", "umfassen", "aufweisen" als "enthalten, aber nicht beschränkt auf" interpretiert.

Ein Verfahren zur Herstellung einer Elektrode für einen Energiespeicher mittels einer Siebdruckvorrichtung umfasst das Auftragen einer Elektrodenpaste mittels der Siebdruckvorrichtung auf ein Substrat. Die Siebdruckvorrichtung enthält ein Sieb zur Aufnahme der Elektrodenpaste, wobei die Elektrodenpaste mittels eines Presselements durch das Sieb auf das Substrat aufgetragen wird, sodass eine gedruckte Elektrodenpaste erhalten wird. Das Sieb enthält Sieböffnungen, die als geschlossene Sieböffnungen ausgebildet sind, sodass die Elektrodenpaste eine Strukturierung erhält, wenn sie durch das Sieb auf das Substrat gedruckt wird, wobei die Strukturierung erhalten wird, weil die geschlossenen Sieböffnungen den Durchfluss der Elektrodenpaste durch das Sieb an den Stellen verhindern, welche die geschlossenen Sieböffnungen enthalten, sodass an den Stellen der gedruckten Elektrodenpaste, die unterhalb der geschlossenen Sieböffnungen angeordnet sind, ein Hohlraum in der gedruckten Elektrodenpaste entsteht. Somit wird lokal keine Elektrodenpaste auf das Substrat aufgetragen, die gedruckte Elektrodenpaste enthält somit Lücken, die den Hohlräumen entsprechen.

Gemäß eines Ausführungsbeispiels enthält die gedruckte Elektrodenpaste mindestens eine erste Elektrodenpastenschicht und eine zweite Elektrodenpastenschicht.

Gemäß eines Ausführungsbeispiels wird die erste Elektrodenpastenschicht mittels eines ersten Siebs auf das Substrat aufgetragen und die zweite Elektrodenpastenschicht auf die erste Elektrodenpastenschicht mittels eines zweiten Siebs aufgetragen. Somit werden gemäß dieses Ausführungsbeispiels für die Herstellung der ersten Elektrodenpastenschicht ein erstes Sieb und für die Herstellung der zweiten Elektrodenpastenschicht ein zweites Sieb vorgesehen. Die ersten und zweiten Siebe können in der derselben Siebdruckvorrichtung angeordnet sein. Alternativ kann das erste Sieb in einer ersten Siebdruckvorrichtung angeordnet sein und das zweite Sieb kann in einer zweiten Siebdruckvorrichtung angeordnet sein. Insbesondere kann die erste Siebdruckvorrichtung ein erstes Sieb enthaltend eine erste Anordnung von geschlossenen Sieböffnungen und die zweite Siebdruckvorrichtung ein zweites Sieb enthaltend eine zweite Anordnung von geschlossenen Sieböffnungen umfassen. Insbesondere kann sich die erste Anordnung von geschlossenen Sieböffnungen von der zweiten Anordnung von geschlossenen Sieböffnungen unterscheiden.

Gemäß eines Ausführungsbeispiels wird die erste Elektrodenpastenschicht mittels eines ersten Siebs enthaltend eine Mehrzahl von geschlossenen ersten Sieböffnungen auf das Substrat aufgetragen und die zweite Elektrodenpastenschicht mittels eines zweiten Siebs enthaltend eine Mehrzahl von geschlossenen zweiten Sieböffnungen auf die erste Elektrodenpastenschicht aufgetragen.

Der Energiespeicher kann insbesondere als Lithium-Ionen Energiespeicher ausgebildet sein. Die Elektrodenpaste insbesondere eine Kathodenpaste oder eine Anodenpaste umfassen.

Ein Sieb für eine Siebdruckvorrichtung zur Herstellung einer Elektrode eines Energiespeichers enthält eine Mehrzahl von Sieböffnungen, wobei zumindest eine der Sieböffnungen als geschlossene Sieböffnung ausgebildet ist. Insbesondere kann die geschlossene Sieböffnung einen mittleren Durchmesser aufweisen, der im Bereich von 50 µm bis einschliesslich 1 mm liegt. Strukturierungen in der gedruckten Elektrodenpaste können somit als Mikrostrukturen ausgebildet sein. Die Mikrostrukturen können als Hohlräume mit einer Querschnittsfläche von grösser als 50 µm bis 1 mm bis erzeugt werden. Insbesondere kann zumindest eine der geschlossenen Sieböffnungen eine Querschnittsfläche aufweisen, die sich von der Querschnittsfläche einer anderen Sieböffnung unterscheidet.

Gemäß eines Ausführungsbeispiels enthält das Sieb eine Gitterstruktur, welche durch Maschen gebildet ist, wobei die Maschen eine Maschenweite aufweisen können, die einstellbar ist. An determinierten Stellen im Sieb werden Maschen geschlossen. Somit kann beim späteren Siebdruckverfahren keine Elektrodenpaste an den Stellen auf das Substrat gelangen, die sich unterhalb einer geschlossenen Sieböffnung befinden, die als geschlossene Masche ausgebildet ist. In der gedruckten Elektrodenpaste entstehen somit Hohlräume oder Löcher, wobei diese Hohlräume oder Löcher eine Mikrostruktur ausbilden. Die Maschen können durch einen Draht gebildet werden. Insbesondere kann der Draht eine Dicke aufweisen, wobei die Dicke des Drahts veränderlich sein kann. Die Mikrostrukturen sind exakt einstellbar, indem die Dicke des Drahts verändert wird, d.h. mit der Varianz der Drahtstärke der Maschen des Siebs. Gemäß eines Ausführungsbeispiels kann die Maschenweite des Siebs verändert werden. Infolge der Varianz der Maschenweite des Siebes sind die Mikrostrukturen exakt einstellbar.

Wenn die Elektrodenpaste mehrere Elektrodenpastenschichten enthält, können Mikrostrukturen in jeder Elektrodenpastenschicht genau eingestellt werden. Insbesondere können die Hohlräume einer ersten Elektrodenpastenschicht unterhalb der Hohlräume einer zweiten Elektrodenpastenschicht angeordnet sein, wobei die zweite Elektrodenpastenschicht auf der ersten Elektrodenpastenschicht angeordnet ist.

Gemäß eines Ausführungsbeispiels sind die Hohlräume der ersten Elektrodenpastenschicht nicht unterhalb der Hohlräume einer zweiten Elektrodenpastenschicht angeordnet, wobei die zweite Elektrodenpastenschicht auf der ersten Elektrodenpastenschicht angeordnet ist. Gemäß eines Ausführungsbeispiels sind die Hohlräume der ersten Elektrodenpastenschicht versetzt zu den Hohlräumen einer zweiten Elektrodenpastenschicht angeordnet, wobei die zweite Elektrodenpastenschicht auf der ersten Elektrodenpastenschicht angeordnet ist.

Selbstverständlich können mehr Elektrodenpastenschichten als die exemplarisch beschriebene erste und zweite Elektrodenpastenschicht vorgesehen werden. Die Ausführungsbeispiele sind auch auf mehr als zwei Elektrodenpastenschichten anwendbar.

Die Anzahl der Hohlräume in unterschiedlichen Elektrodenpastenschichten kann voneinander abweichen. Beispielsweise kann die Anzahl der Hohlräume in der ersten Elektrodenpastenschicht grösser als in der zweiten Elektrodenpastenschicht sein. Gemäß eines Ausführungsbeispiels kann die Anzahl der Hohlräume in der zweiten Elektrodenpastenschicht grösser als in der ersten Elektrodenpastenschicht sein. Insbesondere kann die Anzahl der Hohlräume in den Elektrodenpastenschichten, die vom Substrat weiter entfernt sind, geringer sein als die Anzahl der Hohlräume in den Elektrodenpastenschichten, die näher am Substrat gelegen sind. Insbesondere kann die Anzahl der Hohlräume mit zunehmendem Abstand der entsprechenden Elektrodenpastenschicht vom Substrat graduell abnehmen. Insbesondere kann die Anzahl der Hohlräume in den Elektrodenpastenschichten, die vom Substrat weiter entfernt sind, grösser als die Anzahl der Hohlräume in den Elektrodenpastenschichten sein, die näher am Substrat gelegen sind. Insbesondere kann die Anzahl der Hohlräume mit zunehmendem Abstand der entsprechenden Elektrodenpastenschicht vom Substrat graduell zunehmen. Die Verteilung der Mikrostrukturen in z-Richtung folgt gemäß dieser Ausführungsbeispiele einem Gradienten. Mit der Kombination von unterschiedlichen Siebkonfigurationen, die nacheinander für das Druckverfahren verwendet werden, ist es möglich, gezielt Hohlräume, die Poren entsprechen, in die Elektroden einbauen.

Gemäß eines Ausführungsbeispiels wird die mittels des Druckverfahrens hergestellte gedruckte Elektrodenpaste getrocknet. Das Trocknungsverfahren umfasst die Trocknung der gedruckten Elektrodenpaste in einer Trocknungsvorrichtung. Das Trocknungsverfahren kann diskontinuierlich oder kontinuierlich ablaufen. Ein diskontinuierliches Trocknungsverfahren umfasst die Trocknung der gedruckten Elektrodenpaste in einem Trockenschrank. In einem kontinuierlichen Trocknungsverfahren wird die gedruckte Elektrodenpaste kontinuierlich durch eine Trocknungsvorrichtung bewegt, beispielsweise mittels einer Fördervorrichtung.

Gemäß eines Ausführungsbeispiels wird eine modifizierte Strukturierung durch eine Strukturierungsvorrichtung auf die gedruckte Elektrodenpaste aufgetragen. Zwischen dem Druckverfahren und Trocknungsverfahren kann ein weiterer Prozessschritt vorgesehen werden, sodass die gedruckte Elektrodenpaste vor dem Beginn des Trocknungsverfahrens weiter modifiziert werden kann, indem die modifizierte Strukturierung auf die gedruckte Elektrodenpaste aufgetragen wird. Die Strukturierungsvorrichtung kann zumindest ein Element aus der Gruppe bestehend aus einer Walze, einem Sieb oder einem Stempel umfassen. Beispielsweise kann die modifizierte Strukturierung mit einer entsprechenden Walze oder einem Sieb oder einem Stempel auf die noch feuchte gedruckte Elektrodenpaste übertragen werden. Die modifizierte Strukturierung kann als ein Profil ausgebildet sein. Das Profil kann sich von den durch das Druckverfahren aufgebrachten Mikrostrukturen in Form von Hohlräumen unterscheiden. Das Profil ist unabhängig vom Druckverfahren erzeugbar und kann daher anders ausgebildet sein, beispielsweise können sehr feine Strukturen, welche kleiner als die Maschenweite des Siebs sind, auf die gedruckte Elektrodenpaste aufgebracht werden.

Gemäß eines Ausführungsbeispiels enthält das Substrat eine ebene Oberfläche. Gemäß eines Ausführungsbeispiels enthält das Substrat eine gekrümmte Oberfläche, welche Einbuchtungen oder Ausbuchtungen enthalten kann. Das Druckverfahren gemäß eines der vorhergehenden Ausführungsbeispiele kann auch durchgeführt werden, wenn das Substrat eine nicht-planare Oberfläche enthält. Die gedruckte Elektrodenpaste weist gemäß dieses Ausführungsbeispiels eine der Oberfläche des Substrats entsprechende gekrümmte Oberfläche auf. Insbesondere wenn eine anschließende, zumindest partielle Trocknung der gedruckten Elektrodenpaste erfolgt, verfestigt sich die gegebenenfalls noch fliessfähige gedruckte Elektrodenpaste. Die gedruckte Elektrodenpaste und das Substrat bilden einen Verbund aus, der eine gekrümmte Form aufweist. Durch mechanisches Strecken des Verbundes reißt die gedruckte Elektrodenpaste partiell ein, es entstehen somit Risse in der gedruckten Elektrodenpaste, die Hohlräume ausbilden. Bei optimaler Prozessführung ergibt sich ein stochastisches Muster an Hohlräumen. Insbesondere kann das stochastische Muster an Hohlräumen einer Porenstruktur mit einem erwünschten Oberflächen- zu Volumenverhältnis entsprechen. Somit kann ein Ausgangspunkt jedes Risses durch geeignete Mikrostrukturen, welche zumindest in den Oberflächenbereich der gedruckten Elektrodenpaste eingebracht werden, festgelegt werden. Mit anderen Worten kann mit einer Mikrostrukturierung auf der Oberfläche eine Schwachstelle erzeugt, werden, welche das Entstehen eines Risses begünstigen und determinieren kann. Wenn die Schwachstellen gezielt auf der gedruckten Elektrodenpaste aufgebracht werden, kann ein beliebig ausgebildetes Muster an Hohlräumen als "Riss-Bild" erzeugt werden.

Gemäß eines Ausführungsbeispiels wird die gedruckte Elektrodenpaste nach Abschluss des Siebdruckverfahrens verdichtet. Eine Druckkraft wird gemäß dieses Ausführungsbeispiels auf die gedruckte Elektrodenpaste mittels einer Pressvorrichtung aufgebracht, um die gedruckte Elektrodenpaste zu verdichten, sodass eine verdichtete gedruckte Elektrodenpaste erhalten wird. Insbesondere kann ein Verfahren gemäß EP22168270.1 zum Einsatz kommen.

Wenn eine Mehrzahl von Elektrodenpastenschichten gemäß einigen der vorhergehenden Ausführungsbeispiele vorgesehen werden, kann die Druckkraft für jede der Elektrodenpastenschichten eingestellt werden. Beispielsweise kann die Druckkraft, die mit der Pressvorrichtung auf eine zweite Elektrodenpastenschicht aufgebracht wird, kleiner sein als die Druckkraft, die mit der Pressvorrichtung auf eine erste Elektrodenpastenschicht aufgebracht wird. Insbesondere weist die verdichtete erste Elektrodenpastenschicht eine kleinere Porosität auf als die verdichtete zweite Elektrodenpastenschicht.

Insbesondere kann die Porosität der verdichteten ersten Elektrodenpastenschicht im Bereich von 10 bis einschliesslich 70 % liegen.

Gemäß eines Ausführungsbeispiels wird die Druckkraft durch eine Kalandriervorrichtung erzeugt. Insbesondere kann die Pressvorrichtung als Kalandriervorrichtung ausgebildet sein. Mittels einer Kalandriervorrichtung kann der Pressvorgang kontinuierlich erfolgen, sodass eine kontinuierliche Prozessführung ermöglicht ist.

Eine Elektrode für einen Energiespeicher umfasst eine erste Schicht, die eine erste gedruckte Elektrodenpastenschicht enthält und zumindest eine zweite Schicht, die eine zweite Elektrodenpastenschicht enthält, wobei die zweite Schicht auf der ersten Schicht aufgetragen ist. Die erste Schicht weist eine Porosität Y1 auf und die zweite Schicht weist eine Porosität Y2 auf, wobei die Porosität Y1 kleiner oder grösser als die Porosität Y2 der zweiten Schicht ist. Insbesondere ist die Elektrode mittels eines Verfahrens einem der vorhergehenden Ausführungsbeispiele hergestellt.

Ein Energiespeicher enthält eine Elektrode nach einem der vorhergehenden Ausführungsbeispiele. Der Energiespeicher kann mindestens eine Zelle enthalten, die eine Elektrode enthält, die als Anode ausgebildet ist und eine weitere Elektrode, die als Kathode ausgebildet ist. Die Zelle für den Energiespeicher umfasst mindestens eine Kathode, mindestens eine Anode, ein zwischen der Kathode und der Anode angeordnetes Separatorelement sowie einen Elektrolyten, in welchem sich die Kathode, die Anode und das Separatorelement im Betriebszustand befinden. Die Kathode enthält insbesondere LFP oder NMC, die Anode enthält insbesondere Graphit.

LFP wird in diesem Text als Kürzel für die Komponente Lithiumeisenphosphat, LiFePO₄ verwendet. NMC wird in diesem Text als Kürzel für die Komponente Lithium-Nickel-Mangan-Kobaltoxid, LiNiₓMn_{y}Co_{z}O₂ verwendet. Insbesondere enthält die NMC-Kathode NMC622, NMC111, NMC532 oder NMC811. NMC622 wird als Kürzel für die Komponente LiNi_{0.6}Mn_{0.2}CO_{0.2}O₂ verwendet. NMC111 wird als Kürzel für die Komponente LiNi_{0.3}Mn_{0.3}Co_{0.3}O₂ verwendet. NMC532 wird als Kürzel für die Komponente LiNi_{0.5}Mn_{0.3}Co_{0.2}O₂ verwendet. NMC811 wird als Kürzel für die Komponente LiNi_{0.8}Mn_{0.1}Co_{0.1}O₂ verwendet.

Gemäß eines Ausführungsbeispiels enthält die Anode eine Anodenpaste, die Graphit enthält. Gemäß eines Ausführungsbeispiels enthält zumindest eine der Kathodenpasten oder Anodenpasten ein Bindemittel, welches CMC enthält. CMC wird in diesem Text als Kürzel für die Komponente Carboxymethylcellulose verwendet.

Insbesondere kann nach einem Ausführungsbeispiel die Kathode eine Kathodenpaste umfassen, die einen Massenanteil an aktiver Masse von 50% bis einschliesslich 95% aufweist, wobei die Kathodenpaste zumindest ein Bindemittel, ein Lösungsmittel und/oder ein leitfähiges Additiv enthält. Beispielsweise enthält die Kathodenpaste als aktive Masse NMC oder LFP, als Binder CMC und als Leitadditiv Leitruß oder Graphit. Leitruß wird nachfolgend als C65 bezeichnet. Graphit wird nachfolgend als K6SL bezeichnet.

Gemäß eines Ausführungsbeispiels liegt der Massenanteil an CMC in der Kathodenpaste oder der Anodenpaste im Bereich von 1 [w%] bis einschliesslich 6[w%]. Der Massenanteil CMC kann gemäß eines Ausführungsbeispiels beispielsweise ungefähr 2 [w%] betragen. Gemäß eines Ausführungsbeispiels kann ein Bindemittelgemisch, enthaltend eine Mehrzahl an Bindemitteln vorgesehen sein, wobei eines der Bindemittel CMC enthält. Beispielsweise kann das Bindemittelgemisch CMC und Styrol-Butadien-Kautschuk, nachfolgend als SBR bezeichnet, enthalten. Der Massenanteil SBR kann gemäß eines Ausführungsbeispiels im Bereich von 1 [w%] bis einschliesslich 4 [w%] liegen, beispielsweise ungefähr 3 [w%] betragen. Insbesondere kann SBR als Suspension verwendet werden.

Als Leitadditive können gemäß eines Ausführungsbeispiels Leitruß, nachfolgend als C65 bezeichnet und Graphit, nachfolgend als KS6L bezeichnet, verwendet werden. Beispielsweise kann C65 in einem Bereich von 1 [w%] bis einschliesslich 4 [w%] liegen, insbesondere im Bereich von 2 [w%] bis einschliesslich 3.5 [w%] liegen. Beispielsweise kann KS6L in einem Bereich von 1 [w%] bis einschliesslich 4 [w%] liegen, insbesondere im Bereich von 1 [w%] bis einschliesslich 3 [w%] liegen. Gemäß eines Ausführungsbeispiels beträgt der Massenanteil an C65 3.75 [w%] und der Massenanteil an KS6L 1.25 [w%]. Gemäß eines Ausführungsbeispiels beträgt der Massenanteil an C65 2.5 [w%] und der Massenanteil an KS6L 2.5 [w%].

Gemäß eines Ausführungsbeispiels liegt die Porosität zumindest einer der Kathodenpasten und der Anodenpasten im Bereich von 20 % bis einschliesslich 50 %. Gemäß eines Ausführungsbeispiels liegt die Porosität zumindest einer der Kathodenpasten und der Anodenpasten im Bereich von 30 % bis einschliesslich 40 %.

Gemäß eines Ausführungsbeispiels beträgt der Massenanteil an aktiver Masse 50 bis einschliesslich 90 [w%], der Massenanteil an CMC 2 [w%] bis einschliesslich 6 [w%] und der Massenanteil an Leitadditiv 1 [w%] bis einschliesslich 6 [w%]. Die Kathodenpaste kann eine Porosität aufweisen, die im Bereich von 20 % bis einschliesslich 50 % liegt. Beispielsweise kann die Porosität einer Kathodenpaste oder Anodenpaste, die einen Massenanteil an aktiver Masse von 50 [w%] bis einschliesslich 90 [w%], einen Massenanteil an CMC von 5 % und einen Massenanteil an Leitadditiv von 5 % enthält, im Bereich von 30 % bis einschließlich 40 % liegen. Die Schichtdicke dieser Kathode kann im Bereich von 50 bis einschliesslich 300 [µm], insbesondere 100 [µm] bis einschliesslich 200 [µm] betragen.

Insbesondere weist zumindest eine der Kathodenpasten oder Anodenpasten scherverdünnende Eigenschaften auf. Insbesondere weist zumindest eine der Kathodenpasten oder Anodenpasten 40 % bis 60 % Füllgrad auf.

Gemäß eines Ausführungsbeispiels weist zumindest eine der Kathodenpasten oder Anodenpasten eine Viskosität bei einer Schergeschwindigkeit von 10 [1/s] auf, die im Bereich von 5 [Pas] bis einschliesslich 10 [Pas] liegt.

Gemäß eines Ausführungsbeispiels weist der Binder CMC eine Dichte von 0.85 bis 1.0 [g/cm³ auf. Insbesondere beträgt die Viskosität des CMC-Binders 1500 bis 3000 [Pas] gemessen bei 25 Grad Celsius. Insbesondere umfasst der CMC Binder ein freifliessendes Pulver mit einer mittleren Partikelgrösse von 0.5 mm, welches einfach zu dispergieren oder aufzulösen ist.

Gemäß eines Ausführungsbeispiels enthält die Kathodenpaste LFP in Pulverform. Das LFP Pulver weist insbesondere folgende Partikelgrössenverteilung auf: Dmin: >0.1 [µm], D10: 3.0 +/- 2.0 [µm], D50: 11.0 +/- 1.5 [µm], D90: 24.0 +/- 4.0 [µm], Dmax: <53 [µm]. Insbesondere beträgt die spezifische Oberfläche des LFP 22 +/- 3.0 [m²/g]. Insbesondere beträgt die Klopfdichte des LFP 1.15 +/- 0.2 [g/cm³]. Insbesondere beträgt der Feuchtegehalt des LFP weniger als 800 [ppm] bei KF = 200 [°C].

Gemäß eines Ausführungsbeispiels liegt der pH-Wert der Kathodenpaste oder Anodenpaste im Bereich von 6 bis einschliesslich 10. Die Toleranz beträgt +/-1.5. Insbesondere enthält die Kathodenpaste 90 [w%] LFP als AM, 2 [w%] CMC als Binder, 3 [w%] SBR als Binder. Gemäß eines Ausführungsbeispiels enthält die Kathodenpaste ein Leitadditiv im Bereich von 2 [w%] bis einschliesslich 6 [w%]. Gemäß eines Ausführungsbeispiels enthält die Kathodenpaste Wasser als Lösungsmittel. Insbesondere enthält das Leitadditiv zumindest eine der Komponenten C65 und KS6L.

Gemäß eines Ausführungsbeispiels enthält die Kathodenpaste 90 [w%] NMC als AM, zumindest ein Bindemittel aus der Gruppe bestehend aus CMC und SBR mit einem Massenanteil von 2 [w%] bis einschliesslich 6 [w%], ein Leitadditiv im Bereich von 2 [w%] bis einschliesslich 6 [w%], ferner enthaltend zumindest ein Lösungsmittel aus der Gruppe bestehend aus Wasser. Insbesondere enthält das Leitadditiv zumindest eine der Komponenten C65 und KS6L. Insbesondere enthält die Kathodenpaste ein Tensid, insbesondere ein nicht-ionisches Tensid. Das Tensid kann ein Alkoholalkoxylat umfassen, beispielsweise Isopropanol oder ein nichtionisches Alkoholoxylattensid, welches als Ecosurf ^{™} LF-45 vermarktet wird und nachfolgend als LF-45 bezeichnet wird. Das Tensid kann Polyethylenglycol-p-isooctylphenylether (C₁₄H₂₂O(C₂H₄O)ₙ) umfassen, welches als Triton^{™} X-100 vermarktet wird, nachfolgend als Triton X-100 bezeichnet. Das Tensid kann Polyoxyethylen (10) isooctylcyclohexylether oder 4-(C₈H₁₇)C₆H₁₀(OCH₂CH₂)nOH, mit n~10 umfassen, welches als Triton^{™} reduced vermarktet wird und nachfolgend als Triton-r bezeichnet wird. Das Tensid kann 2-[4-(2,4,4-trimethylpentan-2-yl) phenoxy] ethanol umfassen, welches als Ecosurf EH-9 ^{™} vermarktet wird und nachfolgend als EH-9 bezeichnet wird.

Gemäß eines Ausführungsbeispiels enthält die Anodenpaste 90 [w%] Graphit als AM, zumindest einen Binder aus der Gruppe bestehend aus CMC und SBR mit einem Massenanteil von 2 [w%] bis einschliesslich 6 [w%], ein Leitadditiv im Bereich von 2 [w%] bis einschliesslich 6 [w%], sowie Wasser als Lösungsmittel. Insbesondere enthält das Leitadditiv zumindest eine der Komponenten C65 und KS6L. Beispielsweise enthält das Leitadditiv 2.5 [w%] C65 und 2.5 [w%] KS6L.

Gemäß eines Ausführungsbeispiels enthält zumindest eine der Kathodenpasten oder Anodenpasten einen zusätzlichen Binder. Der zusätzliche Binder kann eine Emulsion enthalten, die eine fluorierte Polyacrylatemulsion umfasst, oder SBR enthalten kann. SBR wird als Kürzel für Styrol-Butadien-Kautschuk verwendet. Beispielsweise kann als zusätzlicher Binder TRD202A oder TRD203A zum Einsatz kommen. TRD202A bezeichnet einen wasserbasierten Hybridpolymerbinder, der ein Acrylpolymer und ein Fluoropolymer, CMC, und ein leitfähiges Kohlenstoffadditiv enthält.

Der zusätzliche Binder kann zumindest ein Element aus der Gruppe bestehend aus SBR, TRD202A, TRD203A enthalten.

Gemäß eines Ausführungsbeispiels enthält zumindest eine der Kathodenpasten oder Anodenpasten ein Dispergierhilfsmittel. Insbesondere umfasst das Dispergierhilfsmittel ein Tensid. Das Dispergierhilfsmittel kann zumindest ein Element aus der Gruppe bestehend aus Isopropanol, Triton X-100, Triton-r, EH-9 oder LF-45 enthalten.

Gemäß eines Ausführungsbeispiels sind zumindest eine der Kathoden, Anoden und der Separatorelemente im Siebdruckverfahren hergestellt. Insbesondere kann zumindest eine der Anoden oder Kathoden eine Anodenpaste oder Kathodenpaste enthalten, die mehrere Anodenpastenschichten oder Kathodenpastenschichten enthält oder die aus mehreren Anodenpastenschichten oder Kathodenpastenschichten besteht.

Gemäß eines Ausführungsbeispiels wird zumindest eine der ersten Kathoden, der Anoden oder Separatorelemente oder zumindest eine der entsprechenden Kathodenpasten oder Anodenpasten verdichtet.

Gemäß eines Ausführungsbeispiels kann zumindest eine der Kathoden oder der Anoden aus mehreren Schichten bestehen. Insbesondere kann nach einem Ausführungsbeispiel die Kathode eine Dicke von 100 [µm] bis einschliesslich 300 [µm] aufweisen. Beispielsweise kann die Kathode eine Dicke von 150 [µm] bis einschliesslich 300 [µm] aufweisen.

Insbesondere kann nach einem Ausführungsbeispiel die Anode eine Dicke von 30 [µm] bis einschliesslich 300 [µm] aufweisen. Beispielsweise kann die Anode eine Dicke von 30 [µm] bis einschliesslich 300 [µm] aufweisen.

Insbesondere kann nach einem Ausführungsbeispiel das Separatorelement eine Dicke von 1 [µm] bis einschliesslich 50 [µm] aufweisen. Insbesondere kann nach einem Ausführungsbeispiel der erste Ableiter eine Dicke von 1 [µm] bis einschliesslich 50 [µm] aufweisen. Insbesondere kann nach einem Ausführungsbeispiel der zweite Ableiter eine Dicke von 1 [µm] bis einschliesslich 50 [µm] aufweisen.

Insbesondere kann nach einem Ausführungsbeispiel der erste Ableiter aus Aluminium oder einer Aluminiumverbindung bestehen. Der erste Ableiter ist gemäß dieses Ausführungsbeispiels als positiver Ableiter ausgebildet. Insbesondere kann nach einem Ausführungsbeispiel der zweite Ableiter aus Kupfer oder einer Kupferverbindung bestehen. Der zweite Ableiter ist gemäß dieses Ausführungsbeispiels als negativer Ableiter ausgebildet.

Gemäß eines Ausführungsbeispiels enthält der Energiespeicher ein Gehäuse, einen ersten Ableiter, zumindest eine der Zellen, einen zweiten Ableiter, wobei das Gehäuse ein Gehäuseelement umfasst, wobei das Gehäuseelement ein Element aus der Gruppe bestehend aus einem Gehäuseboden, einem Gehäusedeckel einem Gehäuseseitenelement umfasst. Insbesondere sind der erste Ableiter und der zweite Ableiter mit der Zelle derart verbunden, dass ein Elektronenfluss/Ionenfluss vom ersten Ableiter durch die Zelle zum zweiten Ableiter erfolgen kann, wenn ein geschlossener Stromkreis ausgebildet ist.

Gemäß eines Ausführungsbeispiels enthält zumindest einer der ersten oder zweiten Ableiter eine siebgedruckte Ableiterschicht. Gemäß eines Ausführungsbeispiels enthält das Gehäuse zumindest ein siebgedrucktes Gehäuseelement. Insbesondere kann die Zelle einen flüssigen Elektrolyten enthalten.

Ein Verfahren zur Herstellung einer Zelle für einen Energiespeicher, wobei die Zelle mindestens eine Kathode, eine Anode, ein zwischen der Kathode und der Anode angeordnetes Separatorelement sowie einen Elektrolyten umfasst, wobei die Kathode, die Anode und das Separatorelement im Betriebszustand mit dem Elektrolyten in Kontakt sind, ist dadurch gekennzeichnet, dass die Kathode mittels einer ersten Siebdruckvorrichtung hergestellt wird, die Anode mittels einer zweiten Siebdruckvorrichtung hergestellt wird, wobei die Kathode eine Kathodenpaste umfasst, die LFP oder NMC enthält, wobei die Anode eine Anodenpaste umfasst, die Graphit enthält, wobei mittels der ersten Siebdruckvorrichtung die Kathodenpaste auf ein Substrat aufgetragen wird, wobei die erste Siebdruckvorrichtung ein erstes Sieb zur Aufnahme der Kathodenpaste enthält, wobei die Kathodenpaste mittels eines Presselements durch das Sieb auf das Substrat aufgetragen wird, wobei das Sieb Sieböffnungen enthält, wobei zumindest eine der Sieböffnungen als geschlossene Sieböffnung ausgebildet ist, sodass die Kathodenpaste eine Strukturierung enthält, wenn sie durch das Sieb auf das Substrat gedruckt wird, wobei die geschlossene Sieböffnung den Durchfluss der Kathodenpaste durch das Sieb an der Stelle verhindert, welche die geschlossene Sieböffnung enthält, sodass ein Hohlraum in der gedruckten Kathodenpaste in einem Bereich der gedruckten Kathodenpaste entsteht, wobei der den Hohlraum enthaltende Bereich unterhalb der entsprechenden geschlossenen Sieböffnung angeordnet ist.

Ein Verfahren zur Herstellung einer Zelle für einen Energiespeicher, wobei die Zelle mindestens eine Kathode, eine Anode, ein zwischen der Kathode und der Anode angeordnetes Separatorelement sowie einen Elektrolyten umfasst, wobei die Kathode, die Anode und das Separatorelement im Betriebszustand mit dem Elektrolyten in Kontakt sind, ist dadurch gekennzeichnet, dass die Kathode mittels einer ersten Siebdruckvorrichtung hergestellt wird, die Anode mittels einer zweiten Siebdruckvorrichtung hergestellt wird, wobei die Kathode eine Kathodenpaste umfasst, die LFP oder NMC enthält, wobei die Anode eine Anodenpaste umfasst, die Graphit enthält, wobei mittels der zweiten Siebdruckvorrichtung die Anodenpaste auf ein Substrat aufgetragen wird, wobei die zweite Siebdruckvorrichtung ein zweites Sieb zur Aufnahme der Anodenpaste enthält, wobei die Anodenpaste mittels eines Presselements durch das Sieb auf das Substrat aufgetragen wird, wobei das Sieb Sieböffnungen enthält, wobei zumindest eine der Sieböffnungen als geschlossene Sieböffnung ausgebildet ist, sodass die Anodenpaste eine Strukturierung enthält, wenn sie durch das Sieb auf das Substrat gedruckt wird, wobei die geschlossene Sieböffnung den Durchfluss der Anodenpaste durch das Sieb an der Stelle verhindert, welche die geschlossene Sieböffnung enthält, sodass ein Hohlraum in der gedruckten Anodenpaste in einem Bereich der gedruckten Anodenpaste entsteht, wobei der den Hohlraum enthaltende Bereich unterhalb der entsprechenden geschlossenen Sieböffnung angeordnet ist.

Gemäß eines Ausführungsbeispiels kann zumindest eine der Kathodenpasten oder Anodenpasten in zwei aufeinanderfolgenden Druckschritten hergestellt werden. Gemäß eines Ausführungsbeispiels enthält die gedruckte Kathodenpaste mindestens eine erste Kathodenpastenschicht und eine zweite Kathodenpastenschicht.

Gemäß eines Ausführungsbeispiels wird die erste Elektrodenpastenschicht mittels eines ersten Siebs enthaltend eine Mehrzahl von geschlossenen ersten Sieböffnungen auf das Substrat aufgetragen und die zweite Kathodenpastenschicht mittels eines zweiten Siebs enthaltend eine Mehrzahl von geschlossenen zweiten Sieböffnungen auf die erste Kathodenpastenschicht aufgetragen.

Gemäß eines Ausführungsbeispiels wird die erste Anodenpastenschicht mittels eines ersten Siebs enthaltend eine Mehrzahl von geschlossenen ersten Sieböffnungen auf das Substrat aufgetragen und die zweite Anodenpastenschicht mittels eines zweiten Siebs enthaltend eine Mehrzahl von geschlossenen zweiten Sieböffnungen auf die erste Anodenpastenschicht aufgetragen.

Gemäß eines Ausführungsbeispiels wird die gedruckte Kathodenpaste nach Abschluss des Siebdruckverfahrens verdichtet. Eine Druckkraft wird gemäß dieses Ausführungsbeispiels auf die gedruckte Kathodenpaste mittels einer Pressvorrichtung aufgebracht, um die gedruckte Kathodenpaste zu verdichten, sodass eine verdichtete gedruckte Kathodenpaste erhalten wird. Insbesondere kann ein Verfahren gemäß EP22168270.1 zum Einsatz kommen.

Wenn eine Mehrzahl von Kathodenpastenschichten gemäß einiger der vorhergehenden Ausführungsbeispiele vorgesehen wird, kann die Druckkraft für jede der Kathodenpastenschichten eingestellt werden. Beispielsweise kann die Druckkraft, die mit der Pressvorrichtung auf eine zweite Kathodenpastenschicht aufgebracht wird, kleiner sein als die Druckkraft, die mit der Pressvorrichtung auf eine erste Kathodenpastenschicht aufgebracht wird. Insbesondere weist die verdichtete erste Kathodenpastenschicht eine kleinere Porosität als die verdichtete zweite Kathodenpastenschicht auf.

Insbesondere kann die Porosität der verdichteten ersten Kathodenpastenschicht im Bereich von 10 % bis einschliesslich 70 % liegen.

Gemäß eines Ausführungsbeispiels wird die gedruckte Anodenpaste nach Abschluss des Siebdruckverfahrens verdichtet. Eine Druckkraft wird gemäß dieses Ausführungsbeispiels auf die gedruckte Anodenpaste mittels einer Pressvorrichtung aufgebracht, um die gedruckte Anodenpaste zu verdichten, sodass eine verdichtete gedruckte Anodenpaste erhalten wird. Insbesondere kann ein Verfahren gemäß EP22168270.1 zum Einsatz kommen.

Wenn eine Mehrzahl von Anodenpastenschichten gemäß einigen der vorhergehenden Ausführungsbeispiele vorgesehen wird, kann die Druckkraft für jede der Anodenpastenschichten eingestellt werden. Beispielsweise kann die Druckkraft, die mit der Pressvorrichtung auf eine zweite Anodenpastenschicht aufgebracht wird, kleiner sein als die Druckkraft, die mit der Pressvorrichtung auf eine erste Anodenpastenschicht aufgebracht wird. Insbesondere weist die verdichtete erste Anodenpastenschicht eine kleinere Porosität auf als die verdichtete zweite Anodenpastenschicht.

Insbesondere kann die Porosität der verdichteten ersten Kathodenpastenschicht im Bereich von 10 bis einschliesslich 70 % liegen.

Gemäß eines Ausführungsbeispiels wird die Druckkraft durch eine Kalandriervorrichtung erzeugt. Insbesondere kann die Pressvorrichtung als Kalandriervorrichtung ausgebildet sein. Mittels einer Kalandriervorrichtung kann der Pressvorgang kontinuierlich erfolgen, sodass eine kontinuierliche Prozessführung ermöglicht ist.

Insbesondere kann zumindest eine der Kathodenpasten oder Anodenpasten ein Bindemittel enthalten, der CMC enthält, wobei Wasser als Lösungsmittel verwendet wird.

Ein Verfahren zur Herstellung eines Energiespeichers, welcher ein Gehäuse, eine Zelle, einen ersten Ableiter und einen zweiten Ableiter umfasst, wobei die Zelle mindestens eine Kathode, mindestens eine Anode, ein zwischen der Kathode und der Anode angeordnetes Separatorelement sowie einen Elektrolyten umfasst, wobei sich die Kathode, die Anode und das Separatorelement im Betriebszustand im Elektrolyten befinden, ist dadurch gekennzeichnet, dass die Kathode mittels einer ersten Siebdruckvorrichtung hergestellt wird, die Anode mittels einer zweiten Siebdruckvorrichtung hergestellt wird, wobei die Kathode durch ein Siebdruckverfahren mit dem ersten Ableiter verbunden wird, wobei das Separatorelement zwischen der Kathode und der Anode angeordnet wird, wobei die Anode durch das Siebdruckverfahren mit dem zweiten Ableiter verbunden wird. Gemäß eines Ausführungsbeispiels wird das Separatorelement mittels einer dritten Siebdruckvorrichtung hergestellt. Insbesondere umfasst die Kathode eine Kathodenpaste, die LFP oder NMC enthält. Insbesondere umfasst die Anode eine Anodenpaste, die Graphit enthält. Insbesondere enthält zumindest eine der Kathodenpasten oder Anodenpasten ein Bindemittel, das CMC enthält.

Gemäß eines Ausführungsbeispiels wird die Elektrodenpaste für einen Energiespeicher nach einem der vorhergehenden Ausführungsbeispiele in einem Extruder oder auf einer Kalandriervorrichtung hergestellt. Insbesondere kann die Elektrodenpaste zu einem Elektrodenpastenextrudat extrudiert werden. Insbesondere kann das Elektrodenpastenextrudat im Siebdruckverfahren zu der Elektrode weiterverarbeitet werden.

Gemäß eines Ausführungsbeispiels werden die Kathodenpaste oder Anodenpaste für einen Energiespeicher nach einem der vorhergehenden Ausführungsbeispiele in einem Extruder oder auf einer Kalandriervorrichtung hergestellt. Insbesondere kann zumindest eine der Kathodenpasten oder Anodenpasten zu einem Kathodenpastenextrudat oder Anodenpastenextrudat extrudiert werden. Insbesondere kann das Kathodenpastenextrudat oder Anodenpastenextrudat im Siebdruckverfahren zu der Kathode oder Anode weiterverarbeitet werden.

Gemäß eines Ausführungsbeispiels wird der erste Ableiter mittels einer ersten Abieitersiebdruckvorrichtung hergestellt. Gemäß eines Ausführungsbeispiels wird der zweite Ableiter mittels einer zweiten Ableitersiebdruckvorrichtung hergestellt.

Gemäß eines Ausführungsbeispiels erfolgt das Siebdruckverfahren zur Herstellung der Kathode in der ersten Siebdruckvorrichtung, wobei die erste Siebdruckvorrichtung eine erste Trocknungseinheit und eine erste Stapelvorrichtung enthält, mittels welcher die Kathode siebgeruckt, gegebenenfalls getrocknet und mit dem ersten Ableiter verbunden wird. Insbesondere erfolgt das Siebdruckverfahren zur Herstellung der Anode in der zweiten Siebdruckvorrichtung, wobei die zweite Siebdruckvorrichtung eine zweite Trocknungseinheit und eine zweite Stapelvorrichtung enthält, mittels welcher die Anode siebgeruckt, gegebenenfalls getrocknet und mit dem zweiten Ableiter verbunden wird. Insbesondere kann eine dritte Siebdruckvorrichtung zur Herstellung des Separatorelements vorgesehen sein. Gemäß eines Ausführungsbeispiels sind eine erste Ableitersiebdruckvorrichtung, gegebenenfalls eine erste Ableitertrocknungseinheit und eine erste Ableiterstapelvorrichtung vorgesehen, mittels welcher der erste Ableiter siebgeruckt, gegebenenfalls getrocknet und mit der Zelle verbunden wird. Gemäß eines Ausführungsbeispiels sind eine zweite Ableitersiebdruckvorrichtung, gegebenenfalls eine zweite Ableitertrocknungseinheit und eine zweite Ableiterstapelvorrichtung vorgesehen, mittels welcher der zweite Ableiter siebgeruckt, gegebenenfalls getrocknet und mit der Zelle wird. Gemäß eines Ausführungsbeispiels sind eine Gehäuseelementsiebdruckvorrichtung, gegebenenfalls eine Gehäuseelementtrocknungsvorrichtung oder eine Gehäuseelementstapelvorrichtung vorgesehen, mittels welcher zumindest ein Gehäuseelement siebgedruckt wird.

LFP oder NMC kann in Pulverform mit einem leitfähigen Additiv gemischt werden und mit Wasser und einem Bindemittel gemischt werden, wodurch eine strukturviskose Kathodenpaste erhältlich ist, die mittels eines Siebdruckverfahrens verarbeitbar ist. In Ergänzung zu dem CMC-Bindemittel kann eine Emulsion verwendet werden, die eine fluorierte Polyacrylatemulsion enthält. Beispielsweise kann TRD202A oder TRD203A zum Einsatz kommen.

Insbesondere kann nach einem Ausführungsbeispiel die Anode einen Massenanteil an aktiver Masse von 50 % bis einschliesslich 95 % aufweisen, einen Bindemittel, ein Lösungsmittel und/oder ein leitfähiges Additiv enthalten. Beispielsweise enthält die Anode als aktive Masse Graphit, als Binder CMC und als Leitadditiv C65. Gemäß eines Ausführungsbeispiels beträgt der Massenanteil an aktiver Masse 90 %, der Massenanteil an CMC 5% und der Massenanteil an Leitadditiv 5 %. Die Anode kann eine Porosität aufweisen, die im Bereich von 20 % bis einschliesslich 50 % liegt. Beispielsweise kann die Porosität einer Anode, die einen Massenanteil an aktiver Masse von 90 %, einen Massenanteil an CMC von 5 % und einen Massenanteil an Leitadditiv von 5 % enthält, 30 % aufweisen. Die Schichtdicke einer Anode kann im Bereich von 50 [µm] bis einschliesslich 300 [µm] liegen. Insbesondere beträgt die Schichtdicke dieser Anode 100 [µm].

Insbesondere kann nach einem Ausführungsbeispiel das Separatorelement aus zwei Deckschichten aus Polypropylen und einer zwischen den beiden Deckschichten angeordneten Zwischenschicht aus Polyethylen bestehen. Gemäß dieses Ausführungsbeispiels kann die Dicke des Separatorelements insbesondere 38 [µm] betragen. Gemäß eines Ausführungsbeispiels enthält das Separatorelement eine Mischung aus Partikeln aus anorganischen Substanzen in einem Matrixmaterial und einem mikroporösen Polyolefin, welches geeignet ist, einen Ionenfluss von der Anode zur Kathode zu unterbinden. Die Partikel aus anorganischen Substanzen können zumindest ein Element aus der Gruppe bestehend aus SiO₂, Al₂O₃, CaCO₃, TiO₂, SiS₂, SiPO₄ enthalten. Das Matrixmaterial kann zumindest ein Element aus der Gruppe bestehend aus Polyethylenoxid, Polyvinylidenfluorid, (nachfolgend als PVDF bezeichnet), N-Methyl-2-pyrrolidon (NMP), CMC, Polytetrafluorethylen (PTFE), Polyurethan (PU), Polyacrylnitril (PAN), Polymethylmethacrylat (PMMA) oder Polytetraethylenglykoldiacrylat enthalten. Das mikroporäse Polyolefin kann eine Polyolefinmembran umfassen, beispielsweise eine Polyethylenmembran. Das Separatorelement kann eine Porosität aufweisen, die im Bereich von 20 % bis 80 % liegt.

Insbesondere kann das Separatorelement nach einem Ausführungsbeispiel einen Elektrolyten enthalten, der zu 50 [Mol %] aus LiPF₆ und zu 50 [Mol %] aus einer Mischung von Ethylencarbonat (EC) und Diethylcarbonat (DEC) besteht. Alternativ oder ergänzend hierzu kann der Elektrolyt zumindest eine der Komponenten MDO, VC und EMC enthalten. MDO wird als Kürzel für die Komponente 3-Methyl-1,4,3-Dioxazol-5-one verwendet. EMC wird als Kürzel für die Komponente Ethylmethylcarbonat verwendet. VC wird als Kürzel für die Komponente Vinylencarbonat verwendet. Für die Zyklisierungstests wird bevorzugt der Elektrolyt 1 M LiPF6 in EC : DEC (1:1 wt. %), 99.9 % H₂O : 20 ppm max, 2 % VC verwendet, der nachfolgend als STD bezeichnet wird.

Um eine Elektrodenpaste für eine Kathode, eine Anode oder ein Separatorelement mittels eines Siebdruckverfahrens verarbeiten zu können, ist es vorteilhaft, wenn diese Elektrodenpaste strukturviskose Eigenschaften aufweist, das heisst, die Viskosität der Elektrodenpaste nimmt bei zunehmenden Scherkräften ab. Wenn Scherkräfte auf die Elektrodenpaste wirken, beispielsweise beim Auftragen der Elektrodenpaste auf ein Sieb einer Siebdruckvorrichtung, nimmt ihre Viskosität ab, was das Siebdruckverfahren erleichtert. Wenn Scherkräfte auf die Elektrodenpaste wirken, entspricht deren Viskosität der dynamischen Viskosität. Die dynamische Viskosität beträgt vorteilhafterweise nicht mehr als 100 [Pas], insbesondere nicht mehr als 75 [Pas], besonders bevorzugt nicht mehr als 60 [Pas]. Nach Abschluss des Siebdruckverfahrens erhöht sich die Viskosität auf die statische Viskosität, weil der Einfluss der Scherkräfte wegfällt. Beispielsweise kann die statische Viskosität der entsprechenden Elektrodenpaste im Ruhezustand mehr als 150 [Pas] betragen. Beispielsweise kann die statische Viskosität im Bereich von 150 [Pas] bis 1000 [Pas] liegen. Durch einen nachträglichen Trocknungsvorgang kann die statische Viskosität der Elektrodenpaste weiter erhöht werden. Zusätzlich kann die Elektrodenpaste komprimiert werden, beispielsweise mittels Kalandrieren oder Walzen.

Gemäß eines Ausführungsbeispiels sind die Zellen als Pouchzellen ausgebildet. Insbesondere haben die Zellen nachfolgende Zellabmessungen: beispielsweise liegt die Länge der Zelle im Bereich von 340 [mm] bis einschliesslich 542 [mm]. Beispielsweise liegt die Breite der Zelle im Bereich von 80 [mm] bis einschliesslich 101 [mm]. Beispielsweise liegt die Dicke der Zelle im Bereich von 8.5 [mm] bis einschliesslich 14 [mm].

Gemäß eines Ausführungsbeispiels weisen die Zellen einander gegenüberliegende Anschlüsse auf. Beispielsweise liegt die Länge der Anschlüsse im Bereich von 16 [mm] bis einschliesslich 25 [mm]. Beispielsweise liegt die Breite der Anschlüsse von 30 [mm] bis einschliesslich 55 [mm]. Beispielsweise liegt die Dicke der Anschlüsse im Bereich von 0.2 [mm] bis einschliesslich 0.4 [mm]. Gemäß eines Ausführungsbeispiels enthalten die Anschlüsse eine Schutzbeschichtung aus Nickel mit einer Schichtdicke von mindestens 0.01 [mm]. Gemäß eines Ausführungsbeispiels enthalten die positiven und negativen Anschlüsse Kupfer als Grundmaterial.

Gemäß eines Ausführungsbeispiels beträgt die Zellmasse maximal 3 [kg]. Gemäß eines Ausführungsbeispiels beträgt das Volumen der Zelle höchstens als 3 Liter. Gemäß eines Ausführungsbeispiels enthält die Zelle eine gefaltete Zelldichtung. Gemäß eines Ausführungsbeispiels ist eine Vorrichtung zur Sicherung einer Zellüberwachung für eine einzelne Zelle vorgesehen (single cell Supervisor).

Gemäß eines Ausführungsbeispiels beträgt die Kapazität der Zelle mindestens 59 [Ah]. Gemäß eines Ausführungsbeispiels beträgt die spezifische Energie mindestens 242 [Wh/kg] insbesondere beträgt die die spezifische Energie mindestens 283 [Wh/kg].

Insbesondere kann nach einem Ausführungsbeispiel der Energiespeicher eine Mehrzahl von Zellen enthalten, die mindestens einen Zellstapel ausbilden. Insbesondere kann nach einem Ausführungsbeispiel die Mehrzahl von Zellen in Parallelschaltung oder in Serienschaltung angeordnet sein. Bei Serienschaltung kann eine Betriebsspannung von mindestens 12 [V] erhältlich sein.

Insbesondere kann nach einem Ausführungsbeispiel der Zellstapel mindestens eine erste und eine zweite Zelle aufweisen, wobei eine Zwischenschicht zwischen der ersten und zweiten Zelle angeordnet ist, wobei die Zwischenschicht den Ableiter für die Kathode der ersten Zelle vom Ableiter für die Anode der zweiten Zelle trennt, sodass sich eine Gesamtspannung zwischen dem ersten Ableiter und dem zweiten Ableiter aus der Summe der Zellspannungen der ersten und zweiten Zelle ergibt. Insbesondere kann nach einem Ausführungsbeispiel die Zwischenschicht elektrisch leitfähig sein, sodass ein Stromfluss oder Ionenfluss von der ersten Zelle in die zweite Zelle erfolgen kann.

Insbesondere können nach einem Ausführungsbeispiel die Kathode oder Anode und das zwischen Kathode und Anode angeordnete Separatorelement in der Zelle derart gestapelt sein, dass das Separatorelement oberhalb der Kathode angeordnet ist und die Anode oberhalb des Separatorelements angeordnet ist. Das Separatorelement liegt gemäß dieses Ausführungsbeispiels auf der Kathode auf.

Insbesondere kann nach einem Ausführungsbeispiel Kathode, die Anode oder das Separatorelement ein porenhaltiges Material enthalten.

Insbesondere können der erste oder zweite Ableiter nach einem Ausführungsbeispiel zumindest teilweise ein Gehäuse ausbilden. Insbesondere können nach einem Ausführungsbeispiel der erste oder zweite Ableiter zumindest teilweise ein Kühlelement ausbilden. Gemäß eines Ausführungsbeispiels umfasst der Energiespeicher eine oder mehrere Zellen sowie die ersten und zweiten Ableiter. Als Ableiter kann beispielsweise eine Aluminiumfolie oder eine Nickelfolie zum Einsatz kommen.

Insbesondere kann nach einem Ausführungsbeispiel auf der ersten Druckauflage oder der zweiten Druckauflage oder der dritten Druckauflage eine Mehrzahl von entsprechenden Kathoden oder Anoden oder Separatorelementen für eine Mehrzahl von Zellen nebeneinander angeordnet werden.

Die Zelle kann in einem Gehäuse eingeschlossen werden. Ein derartiges Gehäuse kann vorzugsweise einen Kunststoff enthalten, der beständig gegenüber sämtlichen Komponenten ist, aus welchen die Kathode, Anode, das Separatorelement und der Elektrolyt besteht. Das Gehäuse kann als siebgedrucktes Gehäuse ausgebildet sein, wie nachfolgend beschrieben wird.

Ein Akkumulator gemäß eines der vorhergehenden Ausführungsbeispiele umfasst ein Gehäuse, einen ersten Ableiter, eine Kathode, ein Separatorelement, eine Anode, einen zweiten Ableiter. Das Gehäuse umfasst ein Gehäuseelement, wobei das Gehäuseelement ein Element aus der Gruppe bestehend aus einem Gehäuseboden, einem Gehäusedeckel und zumindest einem Gehäuseseitenelement umfasst. Der erste Ableiter ist gemäß dieses Ausführungsbeispiels auf dem Gehäuseboden angeordnet. Die Kathode ist auf dem ersten Ableiter angeordnet. Das Separatorelement ist auf der Kathode angeordnet. Die Anode ist auf dem Separatorelement angeordnet. Der zweite Ableiter ist auf der Anode angeordnet. Der Gehäusedeckel ist auf dem zweiten Ableiter angeordnet. Zumindest die Kathode ist als siebgedruckte Elektrode ausgebildet, das Separatorelement ist als siebgedruckte Trennschicht und die Anode als zweite siebgedruckte Elektrode ausgebildet. Der erste Ableiter ist angrenzend an den Gehäuseboden angeordnet und teilweise innerhalb eines Gehäuseseitenelements angeordnet. Der zweite Ableiter ist angrenzend an den Gehäusedeckel ausgebildet und teilweise innerhalb eines Gehäuseseitenelements angeordnet.

Insbesondere enthält zumindest eine der Kathoden oder Anoden mehrere siebgedruckte Teilschichten. Die Kathode oder Anode kann eine erste siebgedruckte Teilschicht enthalten, deren Zusammensetzung sich von einer zweiten siebgedruckten Teilschicht unterscheidet. Zumindest einer der ersten oder zweiten Ableiter kann eine siebgedruckte Ableiterschicht enthalten. Das Gehäuse kann zumindest ein siebgedrucktes Gehäuseelement enthalten. Ein flüssiger Elektrolyt oder ein Feststoffelektrolyt können vorgesehen werden.

Vorteile des erfindungsgemäßen Verfahrens sind unter anderem: kein Aktivmaterialverlust, keine zusätzlichen Arbeitsschritte, kein Energieaufwand und keine zusätzlichen Anlagen sind notwendig.

### Kurzbeschreibung der Zeichnungen

Nachfolgend wird der erfindungsgemäße Energiespeicher anhand einiger Ausführungsbeispiele dargestellt. Es zeigen
Fig. 1 eine Ansicht einer erfindungsgemäßen Elektrodenpaste gemäß eines ersten Ausführungsbeispiels der Erfindung in einer Aufsicht,
Fig. 2 einen Schnitt durch eine Siebdruckvorrichtung zur Herstellung der gedruckten Elektrodenpaste gemäß des ersten Ausführungsbeispiels,
Fig. 3 einen Schnitt durch eine Elektrode gemäß eines zweiten Ausführungsbeispiels der Erfindung,
Fig. 4 einen Schnitt durch eine Elektrode gemäß eines dritten Ausführungsbeispiels der Erfindung,
Fig. 5a einen Schnitt durch eine erste Siebdruckvorrichtung zur Herstellung der gedruckten Elektrodenpaste gemäß des zweiten oder dritten Ausführungsbeispiels,
Fig. 5b einen Schnitt durch eine zweite Siebdruckvorrichtung zur Herstellung der gedruckten Elektrodenpaste gemäß des zweiten oder dritten Ausführungsbeispiels,
Fig. 6 einen Schnitt durch eine Elektrode gemäß eines vierten Ausführungsbeispiels der Erfindung,
Fig. 7 einen Schnitt durch eine Elektrode gemäß eines fünften Ausführungsbeispiels der Erfindung,
Fig. 8a einen Schnitt durch eine Elektrode gemäß eines sechsten Ausführungsbeispiels der Erfindung,
Fig. 8b die Elektrode gemäß Fig. 8a im Einbauzustand.

### Detaillierte Beschreibung der Zeichnungen

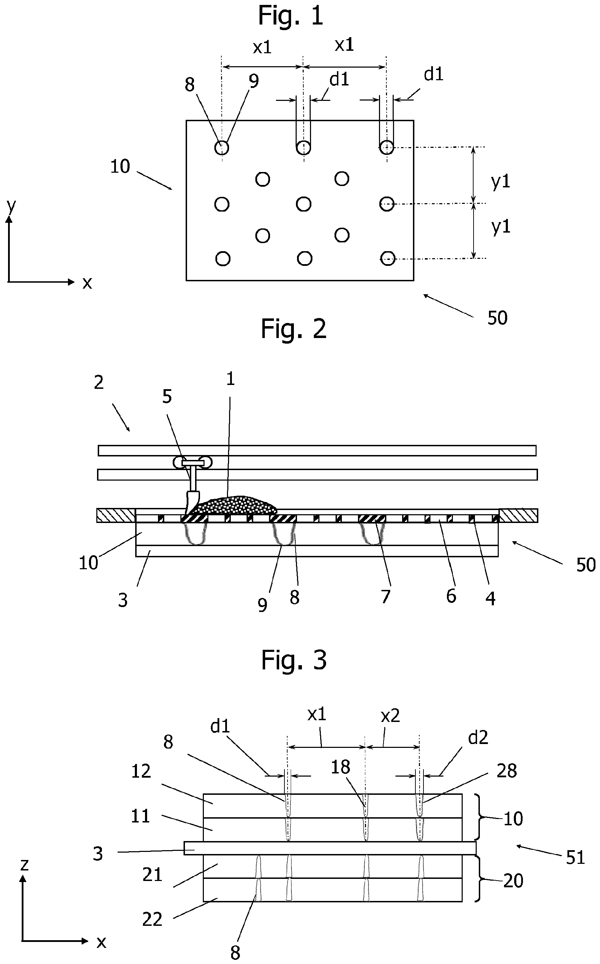

Fig. 1 zeigt eine Ansicht einer erfindungsgemäßen gedruckten Elektrodenpaste 10 für eine Elektrode 50 gemäß eines ersten Ausführungsbeispiels von oben, d.h. mit Blickrichtung auf die x-y Ebene eines orthogonalen Koordinatensystems. Die gedruckte Elektrodenpaste 10 enthält eine Mehrzahl von Strukturierungen 8. Die dargestellte Verteilung der Strukturierungen 8 ist nur als ein mögliches Ausführungsbeispiel anzusehen. Gemäß des vorliegenden Ausführungsbeispiels sind die Strukturierungen 8 als Hohlräume 9 ausgebildet, die in Richtung der x-Achse hintereinander in einer Mehrzahl von sich in Richtung der x-Achse, d.h. in x-Richtung, erstreckenden Reihen angeordnet sind und auch in Richtung der y-Achse hintereinander in einer Mehrzahl von sich in Richtung der y-Achse, d.h. in y-Richtung, erstreckenden Reihen angeordnet sind. Die Hohlräume 9 benachbarter Reihen können zueinander versetzt angeordnet sein. Gemäß des vorliegenden Ausführungsbeispiels weisen die in x-Richtung in derselben Reihe liegenden Hohlräume 9 jeweils gleichen Abstand x1 voneinander auf, wobei der Abstand x1 als der Abstand der Mittenachsen der in der betreffenden Reihe liegenden Hohlräume 9 in x-Richtung definiert ist. Gemäß des vorliegenden Ausführungsbeispiels weisen die in y-Richtung in derselben Reihe liegenden Hohlräume 9 jeweils gleichen Abstand y1 voneinander auf, wobei der Abstand y1 als der Abstand der Mittenachsen der in der betreffenden Reihe liegenden Hohlräume in y-Richtung definiert ist.

Fig. 2 zeigt einen Schnitt durch eine Siebdruckvorrichtung 2 zur Herstellung einer gedruckten Elektrodenpaste 10 mittels einer Elektrodenpaste 1. Die Elektrodenpaste 1 wird mittels der Siebdruckvorrichtung 2 auf ein Substrat 3 aufgetragen. Die Siebdruckvorrichtung 2 enthält ein Sieb 4 zur Aufnahme der Elektrodenpaste 1. Das Sieb 4 enthält eine Mehrzahl an Sieböffnungen 6, wobei zumindest eine der Sieböffnungen 6 als geschlossene Sieböffnung 7 ausgebildet ist. Die Elektrodenpaste 1 wird mittels eines Presselements 5 durch die im Sieb 4 befindlichen Sieböffnungen 6 auf das Substrat 3 aufgetragen. Die Elektrodenpaste 1 erhält eine Strukturierung 8, wenn sie auf das Substrat 3 gedruckt wird, sodass eine gedruckte Elektrodenpaste 10 erhalten wird. Die geschlossene Sieböffnung 7 verhindert den Durchfluss der Elektrodenpaste 1 durch das Sieb 4 an der Stelle, welche die geschlossene Sieböffnung 7 enthält, sodass in der gedruckten Elektrodenpaste 10 ein Hohlraum 9 in einem Bereich der gedruckten Elektrodenpaste 10 entsteht. Der den Hohlraum 9 enthaltende Bereich ist unterhalb der entsprechenden geschlossenen Sieböffnung 7 angeordnet.

Fig. 3 zeigt einen Schnitt durch eine Elektrode 51 gemäß eines zweiten Ausführungsbeispiels. Die gedruckte Elektrodenpaste 10 enthält eine erste Elektrodenpastenschicht 11 und eine zweite Elektrodenpastenschicht 12. Die gedruckte Elektrodenpaste 10 ist auf einem Substrat 3 angeordnet, welches beispielsweise eine elektrisch leitende Folie umfasst. Auf der gegenüberliegenden Seite des Substrats 3 kann eine weitere gedruckte Elektrodenpaste 20 angebracht sein, die ebenfalls eine erste Elektrodenpastenschicht 21 und eine zweite Elektrodenpastenschicht 22 enthält. In der vorliegenden Darstellung weisen die erste Elektrodenpastenschicht 11 und die erste Elektrodenpastenschicht 21 und die zweite Elektrodenpastenschicht 12 und die zweite Elektrodenpastenschicht 22 unterschiedliche Strukturierungen 8, 18, 28 auf. Nur drei der Strukturierungen tragen Bezugszeichen, die Aussagen gelten selbstverständlich für sämtliche Strukturierungen. Selbstverständlich ist es möglich, dass dieselbe Strukturierung 8, 18, 28 spiegelbildlich angeordnet wird, was zeichnerisch nicht dargestellt ist. Fig. 3 kann also auch die Strukturierungen 8, 18, 28 für zwei verschiedene Elektroden zeigen.

Zudem können die Strukturierungen 8, 18, 28 unterschiedliche Innendurchmesser aufweisen, beispielsweise ist der Innendurchmesser d1 des in der Fig. 3 links oben dargestellten Hohlraums 8 kleiner als der Innendurchmesser d2 des in Fig. 3 rechts oben dargestellten Hohlraums 28. Zudem können sich die Abstände x1, x2 der Mittenachsen der Hohlräume 8, 18, 28 voneinander unterscheiden. In der vorliegenden Darstellung ist gezeigt, dass ich die Abstände der Hohlräume in der x-Richtung voneinander unterscheiden. Der Hohlraum 18 ist in x-Richtung vom Hohlraum 8 in einem Abstand x1 angeordnet. Der Hohlraum 28 ist in x-Richtung vom Hohlraum 18 in einem Abstand x2 angeordnet. In gleicher Weise können sich die Abstände der Hohlräume in der y-Richtung unterscheiden, was in der vorliegenden Darstellung nicht sichtbar ist. Zudem kann die Anzahl der Hohlräume 8 in verschiedenen Elektrodenpastenschichten unterschiedlich sein. Beispielsweise kann sich die Anzahl der Hohlräume in der gedruckten Elektrodenpastenschicht 10 von der Anzahl der Hohlräume in der gedruckten Elektrodenpastenschicht 20 unterscheiden.

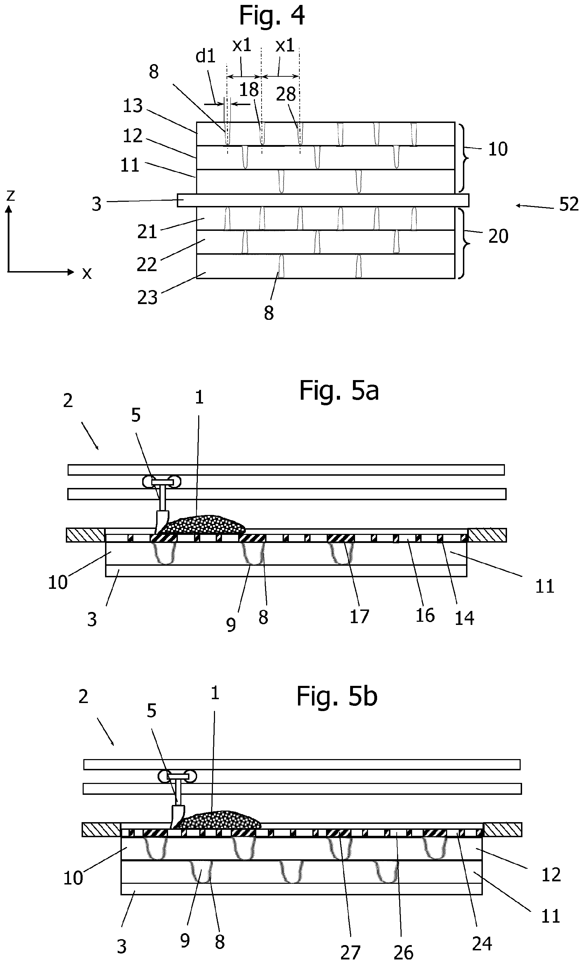

Fig. 4 zeigt einen Schnitt durch eine Elektrode 52 gemäß eines dritten Ausführungsbeispiels. Die gedruckte Elektrodenpaste 10 enthält eine erste Elektrodenpastenschicht 11, eine zweite Elektrodenpastenschicht 12 und eine dritte Elektrodenpastenschicht 13. Die gedruckte Elektrodenpaste 10 ist auf einem Substrat 3 angeordnet, welches beispielsweise eine elektrisch leitende Folie umfasst. Auf der gegenüberliegenden Seite des Substrats 3 kann eine weitere gedruckte Elektrodenpaste 20 angebracht sein, die ebenfalls eine erste Elektrodenpastenschicht 21, eine zweite Elektrodenpastenschicht 22 und eine dritte Elektrodenpastenschicht 31 enthält. In der vorliegenden Darstellung weisen die erste Elektrodenpastenschicht 11, die zweite Elektrodenpastenschicht 12 und die dritte Elektrodenpastenschicht 13 unterschiedliche Strukturierungen 8 auf. Insbesondere kann sich die Anzahl der Strukturierungen 8 in jeder der ersten, zweiten und dritten Elektrodenpastenschichten 11, 12, 13 unterscheiden. Beispielsweise kann die Anzahl der Strukturierungen mit zunehmendem Abstand vom Substrat 3 zunehmen. Mit anderen Worten weisen die Strukturierungen 8 der ersten, zweiten und dritten Elektrodenpastenschichten 11, 12, 13 einen Gradienten auf. Zudem können sich, wie im vorhergehenden Ausführungsbeispiel beschrieben, zumindest eine der Abmessungen oder der Abstand der Strukturierungen 8 voneinander in jeder der ersten, zweiten und dritten Elektrodenpastenschichten 11, 12, 13 unterscheiden. Die Abmessung kann beispielsweise einen Innendurchmesser oder eine Querschnittsfläche umfassen.

Selbstverständlich ist es möglich, dass die ersten, zweiten und dritten Elektrodenpastenschichten 11, 12, 13 spiegelbildlich angeordnet wird, was zeichnerisch nicht dargestellt ist. Fig. 4 kann auch die Strukturierungen 8 für zwei verschiedene Elektroden zeigen.

Fig. 5a zeigt einen Schnitt durch eine Siebdruckvorrichtung 2 zur Herstellung der gedruckten Elektrodenpaste 10 mittels einer Elektrodenpaste 1. Die Elektrodenpaste 1 wird mittels der Siebdruckvorrichtung 2 auf ein Substrat 3 aufgetragen. Die Siebdruckvorrichtung 2 enthält ein erstes Sieb 14 zur Aufnahme der Elektrodenpaste 1. Das erste Sieb 14 enthält eine Mehrzahl an ersten Sieböffnungen 16, wobei zumindest eine der ersten Sieböffnungen 16 als geschlossene erste Sieböffnung 17 ausgebildet ist. Die Elektrodenpaste 1 wird mittels eines Presselements 5 durch die im ersten Sieb 14 befindlichen ersten Sieböffnungen 16 auf das Substrat 3 aufgetragen. Die Elektrodenpaste 1 erhält eine Strukturierung 8, wenn sie auf das Substrat 3 gedruckt wird, sodass eine erste Elektrodenpastenschicht 11 einer gedruckten Elektrodenpaste 10 erhalten wird. Die erste geschlossene Sieböffnung 17 verhindert den Durchfluss der Elektrodenpaste 1 durch das erste Sieb 14 an der Stelle, welche die erste geschlossene Sieböffnung 17 enthält, sodass in der ersten Elektrodenpastenschicht 11 der gedruckten Elektrodenpaste 10 ein Hohlraum 9 in einem Bereich der gedruckten Elektrodenpaste 10 entsteht. Der den Hohlraum 9 enthaltende Bereich ist unterhalb der entsprechenden ersten geschlossenen Sieböffnung 17 angeordnet.

Fig. 5b zeigt die Siebdruckvorrichtung 2 gemäß Fig. 5a, welche ein zweites Sieb 24 zur Aufnahme der Elektrodenpaste 1 enthält. Gleiche oder gleichwirkende Bauelemente tragen dieselben Bezugszeichen wie in Fig. 5a. Das zweite Sieb 24 enthält eine Mehrzahl an zweiten Sieböffnungen 26, wobei zumindest eine der zweiten Sieböffnungen 26 als geschlossene zweite Sieböffnung 27 ausgebildet ist. Die Elektrodenpaste 1 wird mittels eines Presselements 5 durch die im zweiten Sieb 24 befindlichen zweiten Sieböffnungen 26 auf die erste Elektrodenpastenschicht 11 aufgetragen, die sich bereits auf dem Substrat 3 befindet. Die Elektrodenpaste 1 erhält eine Strukturierung 8, wenn sie auf die erste Elektrodenpastenschicht 11 gedruckt wird, sodass eine zweite Elektrodenpastenschicht 12 der gedruckten Elektrodenpaste 10 erhalten wird. Die geschlossene zweite Sieböffnung 27 verhindert den Durchfluss der Elektrodenpaste 1 durch das zweite Sieb 24 an der Stelle, welche die geschlossene zweite Sieböffnung 7 enthält, sodass in der zweiten Elektrodenpastenschicht 12 der gedruckten Elektrodenpaste 10 ein Hohlraum 9 in einem Bereich der zweiten Elektrodenpastenschicht 12 der gedruckten Elektrodenpaste 10 entsteht. Der den Hohlraum 9 enthaltende Bereich ist unterhalb der entsprechenden geschlossenen zweiten Sieböffnung 27 angeordnet.

Gemäß jedes der vorhergehenden Ausführungsbeispiele kann eine modifizierte Strukturierung durch eine Strukturierungsvorrichtung auf die gedruckte Elektrodenpaste aufgetragen werden.

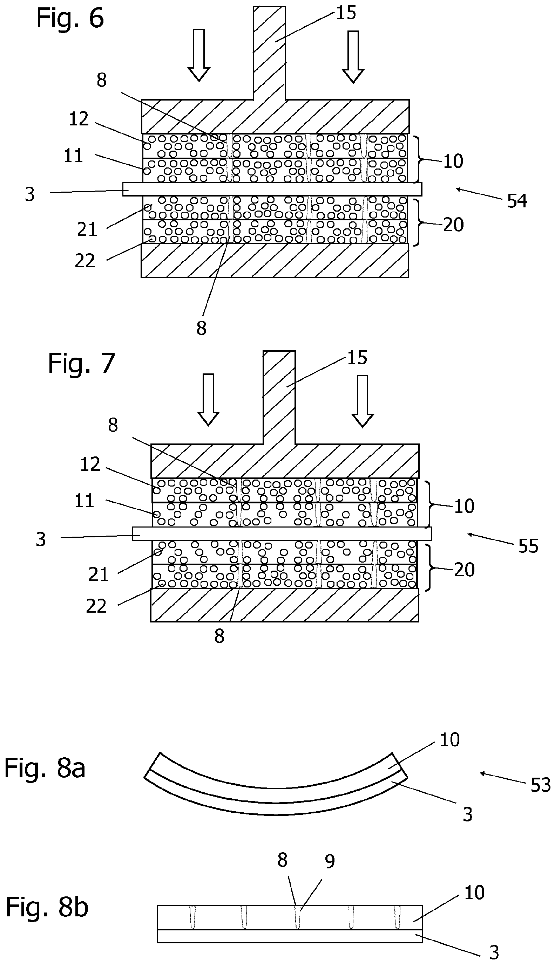

Fig. 6 zeigt einen Schnitt durch eine Elektrode 54 gemäß eines vierten Ausführungsbeispiels, die mittels eines Druckverfahrens hergestellt ist, wobei jede der ersten und zweiten Elektrodenpastenschichten 11, 12, 21, 22 der im Druckverfahren hergestellten Elektrode 51 nach Abschluss des Druckverfahrens einem zusätzlichen Pressvorgang ausgesetzt wird. In diesem Pressvorgang wird die Elektrode 51 mittels einer Strukturierungsvorrichtung 15 mit einer modifizierten Strukturierung versehen. Die mittels des Druckverfahrens hergestellte Elektrode 54 kann somit einen inhomogenen Aufbau der gedruckten Elektrodenpaste 10, 20 aufweisen. In Fig. 6 wird exemplarisch von der Elektrode 51 ausgegangen, das Verfahren ist aber auch für die Elektroden 50 oder 52 in gleicher Weise anwendbar, wenn diese Elektroden nachträglich einer Verdichtung durch einen Pressvorgang unterworfen werden. Jede der ersten und zweiten Elektrodenpastenschichten 11, 12, 21, 22 wird vereinfacht durch eine Kugelwolke dargestellt, wobei die Kugeln die Partikel der entsprechenden ersten oder zweiten Elektrodenpastenschicht 11, 12, 21, 22 darstellen. Die Partikel sind somit inhomogen in der entsprechenden ersten oder zweiten Elektrodenpastenschicht 11, 12, 21, 22 verteilt. In der Fig. 6 ist erkennbar, dass die Partikel des Schichtbereichs, der näher zu der Strukturierungsvorrichtung 15 angeordnet ist, dichter gepackt sind als die Partikel, die sich in zunehmender Entfernung zur Strukturierungsvorrichtung 15 befinden, wobei gemäß dieses Ausführungsbeispiels jede der ersten und zweiten Elektrodenpastenschichten 11, 12, 21, 22 dem Pressvorgang im Anschluss an das Druckverfahren unterworfen wird.

Mit zunehmendem Abstand vom Substrat 3 nimmt die Porosität in den gezeigten ersten Elektrodenpastenschichten 11, 21 ab, weil die von der Strukturierungsvorrichtung weiter entfernten Schichtbereiche weniger stark verdichtet werden. Mit zunehmendem Abstand von den entsprechenden ersten Elektrodenpastenschichten 11, 21 nimmt die Porosität in den gezeigten zweiten Elektrodenpastenschichten 12, 22 ab, weil die von der Strukturierungsvorrichtung weiter entfernten Schichtbereiche weniger stark verdichtet werden.

Alternativ kann der Schichtaufbau jeder der Elektrodenpastenschichten dahingehend verändert werden, dass die Porosität mit zunehmendem Abstand vom Substrat 3 bzw. der ersten Elektrodenpastenschicht 11, 21 zunimmt. Diese Variante ist vorteilhaft für einen Ionentransport, da ein Elektrolyt besser von der entsprechenden Elektrodenpastenschicht aufgenommen werden kann, deren Porosität mit zunehmendem Abstand vom Substrat 3 bzw. der ersten Elektrodenpastenschicht 11, 21 zunimmt. Dieses Ergebnis kann beispielsweise erhalten werden, wenn ein zwischen den Partikeln befindliches Fluid beim Pressvorgang über die Strukturierungsvorrichtung 15 entfernt wird (nicht dargestellt).

Fig. 7 zeigt einen Schnitt durch eine Elektrode 55 gemäß eines fünften Ausführungsbeispiels, die mittels eines Druckverfahrens hergestellt ist, wobei die ersten und zweiten Elektrodenpastenschichten 11, 12, 21, 22 der im Druckverfahren hergestellten Elektrode 51 nach Abschluss des Druckverfahrens in ihrer Gesamtheit einem zusätzlichen Pressvorgang ausgesetzt werden. In diesem Pressvorgang wird die Elektrode 51 mittels einer Strukturierungsvorrichtung 15 mit einer modifizierten Strukturierung versehen. Das Druckverfahren ist in Fig. 7 exemplarisch für die Elektrode 51 gezeigt, das Verfahren ist aber auch für die Elektroden 50 oder 52 in gleicher Weise anwendbar. Die nachträgliche Verdichtung resultiert in einem inhomogenen Aufbau der gedruckten Elektrodenpaste 10, 20. Jede der ersten und zweiten Elektrodenpastenschichten 11, 12, 21, 22 wird vereinfacht durch eine Kugelwolke dargestellt, wobei die Kugeln die Partikel der entsprechenden ersten oder zweiten Elektrodenpastenschicht 11, 12, 21, 22 darstellen. Die Partikel sind somit inhomogen in der entsprechenden ersten oder zweiten Elektrodenpastenschicht 11, 12, 21, 22 verteilt. Gemäß dieses Ausführungsbeispiels ist ebenfalls ein Schichtaufbau der Elektrodenpasten 10, 20 gezeigt, für welchen die Porosität mit zunehmendem Abstand vom Substrat 3 zunimmt. Allerdings erfolgt die Herstellung der Elektrodenpasten 10, 20 auf eine andere Weise, nämlich durch Herstellung der ersten Elektrodenpastenschicht 11, 21 im Druckverfahren und einem anschliessenden gemeinsamen Pressvorgang in der Strukturierungsvorrichtung 15. Die erste Elektrodenpastenschicht 11 weist eine gemittelte Porosität Y1 auf und die zweite Elektrodenpastenschicht 12 weist eine gemittelte Porosität Y2 auf, wobei die gemittelte Porosität Y2 kleiner als die gemittelte Porosität Y1 ist. Die erste Elektrodenpastenschicht 21 weist eine gemittelte Porosität Y3 auf und die zweite Elektrodenpastenschicht 22 weist eine gemittelte Porosität Y4 auf, wobei die gemittelte Porosität Y4 kleiner als die gemittelte Porosität Y3 ist.

In Fig. 8a ist ein sechstes Ausführungsbeispiel einer Elektrode 53 dargestellt, gemäß welchem das Substrat 3 nach dem Druckvorgang eine gekrümmte Oberfläche aufweist. In einer auf dem Substrat aufliegenden gedruckten Elektrodenpaste 10 ist eine Strukturierung 8, die beispielsweise gemäß eines der vorgängig beschriebenen Ausführungsbeispiele aufgebracht worden ist, nicht sichtbar, da die Hohlräume 9 bedingt durch die Krümmung des Substrats zusammengedrückt werden und daher in Fig. 8a nicht sichtbar sind. Alternativ kann bereits das gekrümmte Substrat bedruckt werden. Die Elektrode 53 kann nach dem Druckverfahren in einer Trocknungsvorrichtung zumindest teilweise getrocknet werden.

Fig. 8b zeigt die Elektrode 53 gemäß Fig. 8a im Einbauzustand, welche nach der Trocknung mittels eines Streckmittels gestreckt worden ist, sodass die Oberfläche des Substrats 3 eben ausgebildet ist. Beim Strecken der Elektrode reisst die gedruckte, getrocknete Elektrodenpaste zumindest teilweise ein, sodass Risse entstehen. Durch die Risse werden Hohlräume 9 ausgebildet, die eine Strukturierung 8 ausbilden. Wenn die physikalischen Eigenschaften der gedruckten getrockneten Elektrodenpaste durch exakt kontrollierte Prozessführung homogen sind, bildet die Strukturierung 8 ein stochastisches Muster aus. Insbesondere kann ein gewünschtes Oberflächen- zu Volumenverhältnis eingestellt werden, sodass eine definierte Strukturierung in die gedruckte, getrocknete Elektrodenpaste eingebracht werden kann.

Insbesondere kann der Ausgangspunkt der Risse durch eine im Druckverfahren eingebrachte Strukturierung genau festgelegt werden, sodass die Risse gemäß eines vorbestimmten Musters entstehen. D.h., die Risse entstehen zwangsläufig an den Stellen, an welchen durch die Strukturierung bereits eine lokale Schwachstelle in der gedruckten, getrockneten Elektrodenpaste vorhanden ist.

Für den Fachmann ist offensichtlich, dass viele weitere Varianten zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Verfahren zur Herstellung einer Elektrode (50, 51, 52, 53) für einen Energiespeicher mittels einer Siebdruckvorrichtung (2), wobei mittels der Siebdruckvorrichtung (2) eine Elektrodenpaste (1) auf ein Substrat (3) aufgetragen wird, wobei die Siebdruckvorrichtung (2) ein Sieb (4, 14, 24) zur Aufnahme der Elektrodenpaste (1) enthält, wobei die Elektrodenpaste (1) mittels eines Presselements (5) durch das Sieb (4, 14, 24) auf das Substrat (3) aufgetragen wird, **dadurch gekennzeichnet, dass** das Sieb (4) Sieböffnungen (6) enthält, wobei zumindest eine der Sieböffnungen (6) als geschlossene Sieböffnung (7) ausgebildet ist, sodass die Elektrodenpaste (1) eine Strukturierung (8, 18, 28) erhält, wenn sie durch das Sieb (4, 14, 24) auf das Substrat (3) gedruckt wird, wobei eine gedruckte Elektrodenpaste (10, 20) erhalten wird, wobei die geschlossene Sieböffnung (7) den Durchfluss der Elektrodenpaste (1) durch das Sieb (4, 14, 24) an der Stelle verhindert, welche die geschlossene Sieböffnung (7) enthält, sodass in der gedruckten Elektrodenpaste (10, 20) ein Hohlraum (9) in einem Bereich der gedruckten Elektrodenpaste (10, 20) entsteht.

2. Verfahren nach Anspruch 1, wobei die gedruckte Elektrodenpaste (10, 20) mindestens eine erste Elektrodenpastenschicht (11, 21) und eine zweite Elektrodenpastenschicht (12, 22) enthält.

3. Verfahren nach einem der vorhergehenden Ansprüche, wobei die erste Elektrodenpastenschicht (11, 21) mittels eines ersten Siebs (14) enthaltend eine Mehrzahl von geschlossenen ersten Sieböffnungen (17) auf das Substrat aufgetragen wird und die zweite Elektrodenpastenschicht (12, 22) mittels eines zweiten Siebs (24) enthaltend eine Mehrzahl von geschlossenen zweiten Sieböffnungen (27) auf die erste Elektrodenpastenschicht (11) aufgetragen wird.

4. Verfahren nach Anspruch 3, wobei sich die geschlossenen ersten Sieböffnungen (17) des ersten Siebs (14) von den geschlossenen zweiten Sieböffnungen (27) des zweiten Siebs (24) unterscheiden.

5. Verfahren nach einem der vorhergehenden Ansprüche, wobei eine modifizierte Strukturierung durch eine Strukturierungsvorrichtung auf die gedruckte Elektrodenpaste (10, 20) aufgetragen wird.

6. Sieb (4, 14, 24) für eine Siebdruckvorrichtung (2) zur Herstellung einer Elektrode (50, 51, 52, 53) eines Energiespeichers, welches eine Mehrzahl von Sieböffnungen (6, 16, 26) enthält, wobei zumindest eine der Sieböffnungen als geschlossene Sieböffnung (7, 17, 27) ausgebildet ist.

7. Sieb nach Anspruch 6, wobei die geschlossene Sieböffnung (7, 17, 27) einen mittleren Durchmesser aufweist, der im Bereich von 50 µm bis maximal 1 mm liegt.

8. Sieb nach einem der Ansprüche 6 oder 7, wobei das Sieb (4, 14, 24) eine Mehrzahl von geschlossenen Sieböffnungen (7, 17, 27) enthält, wobei zumindest eine der geschlossenen Sieböffnungen (7, 17, 27) eine Querschnittsfläche aufweist, die sich von der Querschnittsfläche einer der anderen geschlossenen Sieböffnungen unterscheidet.

9. Sieb nach einem der Ansprüche 6 bis 8, wobei das Sieb (4, 14, 24) eine Gitterstruktur enthält, welche durch Maschen gebildet ist, wobei die Maschen eine Maschenweite aufweisen können, die einstellbar ist.

10. Sieb nach Anspruch 9, wobei die Maschen durch einen Draht ausgebildet sind, wobei insbesondere der Draht eine Dicke aufweist, die veränderlich ist.
